# EUROPEAN PATENT APPLICATION

(11) **EP 2 910 523 A1**
(43) Date of publication of application: **26.08.2015**
(21) Application number: 14156085.4
(22) Date of filing: 21.02.2014
(51) Int. Cl.: C01B 3/58

(54) **Methanation process with a passive heat exchange medium**

(71) Applicant: HALDOR TOPSØE A/S, 2800 Kgs. Lyngby (DK)
(72) Inventor: WIX, Christian, 2800 Kgs. Lyngby (DK); MEJDAHL, Lasse, 2800 Kgs. Lyngby (DK)
(74) Representative: Haldor Topsøe A/S

(57) **Abstract**

The present disclosure relates to a methanation stage comprising at least one methanation reactor holding an amount of methanation catalyst, said reactor having an inlet for a stream of a feed gas rich in hydrogen and a carbon oxide, such as carbon monoxide or carbon dioxide, said reactor further being configured for directing said feed gas to contact said methanation catalyst, and where said methanation reactor further comprises an outlet for a stream of a methane rich gas having a higher temperature than said feed gas, where said methanation stage further comprises
a heat providing means for a heat exchange configured for heating said feed gas upstream said methanation reactor,
and a heat collecting means for a heat exchange configured for cooling said gas rich in methane downstream said methanation reactor,
characterized in that said two means for heat exchange are thermally connected by a heat transfer medium with the associated benefit obtained by the use of a heat transfer medium avoiding the process risk of leakages from the feed gas to the methane rich gas.

## Description

Substitute Natural Gas (SNG) can be produced in large scale from coal via gasification or from coke oven gas and subsequent methanation of the produced synthesis gas in one or several reactors to achieve a sufficiently high CH₄ content in the final product. The methanation step is often carried out in a series of adiabatic, fixed bed reactors, where the main reactions taking place are:

CO + H₂O = CO₂ + H₂ (1)

CO + 3 H₂ = CH₄ + H₂O (2)

In the case of methanation from CO₂ and H₂, it is believed that the mechanism of the reaction goes first via reverse water gas shift (i.e. the reverse of reaction (1)), followed by CO methanation to form CH₄, so that the overall reaction is:

CO₂ + 4 H₂ = CH₄ + 2 H₂O (3)

The methanation of synthesis gas is highly exothermic, which results in a large temperature increase in these reactors. At the same time the inlet temperature must be sufficiently high for igniting the process. Therefore the raw synthesis gas for methanation has traditionally been preheated by gas/gas heat exchange, prior to desulfurization, utilizing hot effluent gas from a downstream reactor. Since the methanation process is highly exothermic, a high amount of waste heat is produced, some at a temperature where it is not possible to use the waste heat for production of high pressure steam. It is therefore energy efficient to use the low grade heat for pre-heating the raw synthesis gas in a gas/gas heat exchanger, as shown e.g. in US 4,130,575.

Due to the pressure loss through the system, a leakage (e.g. a tube rupture) in a gas/gas raw synthesis gas preheater may cause the raw synthesis gas to enter the hot effluent gas and thereby bypass the desulphurization unit. Such a bypass may lead to sulfur poisoning of downstream reactors as well as to an undesirable balance between the methanation in the process stages, in turn leading to a lower overall conversion of the raw synthesis gas. To avoid this risk of inefficient operation it has been identified that an apparently inefficient heat transfer by a heat transfer medium such as steam or oil is beneficial in spite of an added investment and an added running expense.

Secondary indirect heat exchange is in the following used for a process for heat exchange, in which heat is transferred by means of a circuit of heat exchange medium such that a heat exchanger is used for transferring (collecting) heat from a hot process stream to a stream of heat exchange medium, and then in a further heat exchanger the heat exchange medium is used for transferring (providing) heat to a cold process stream.

A heat collecting heat exchanger is used for a heat exchanger in which a heat exchange medium receives thermal energy from a process gas having a higher temperature than the heat exchange medium.

A heat providing heat exchanger is used for a heat exchanger in which a heat exchange medium provides thermal energy to a process gas having a lower temperature than the heat exchange medium.

In a broad form the present disclosure relates to a methanation stage comprising at least one methanation reactor holding an amount of methanation catalyst, said reactor having an inlet for a stream of a feed gas rich in hydrogen and a carbon oxide, such as carbon monoxide or carbon dioxide, said reactor further being configured for directing said feed gas to contact said methanation catalyst, and where said methanation reactor further comprises an outlet for a stream of a methane rich gas having a higher temperature than said feed gas, where said methanation stage further comprises
a heat providing means for a heat exchange configured for heating said feed gas upstream said methanation reactor,
and a heat collecting means for a heat exchange configured for cooling said gas rich in methane downstream said methanation reactor,
characterized in that said two means for heat exchange are thermally connected by a heat transfer medium with the associated benefit obtained by the use of a heat transfer medium of avoiding the risk of leakages from the feed gas to the methane rich gas in the process.

In a further embodiment said heat transfer medium is steam or oil with the associated benefit of steam being a readily available heat transfer medium with a high heat capacity.

In a further embodiment the temperature of feed gas after heat exchange is 120-350°C with the associated benefit of the feed gas having a suitable temperature for activating chemical reaction.

In a further embodiment the temperature of methane rich gas prior to heat exchange is 450-750°C with the associated benefit of the temperature corresponding to a high extent of reaction while being below temperatures being damaging to the catalytically active material.

In a further embodiment the disclosure relates to a process plant further comprising a reactor for gasification of carbonaceous materials, including coal, petcoke, waste or a renewable fuel, with the associated benefit of providing a plant for the production of synthetic natural gas from such materials which are impractical to convert by other means with a safe operation, an efficient heat exchange and at low investment costs.

In a further embodiment said feed gas comprises coke oven gas.

A further aspect of the present disclosure relates to a methanation process comprising the steps of preheating a feed gas rich in hydrogen and a carbon oxide, such as carbon monoxide or carbon dioxide, by a heat exchange with a heat exchange medium,
in the presence of a material catalytically active in methanation reacting said feed gas to form a methane rich gas having a higher temperature than said feed gas, and
transferring heat from said methane rich gas to said heat exchange medium with the associated benefit of avoiding the risk of transferring methane rich gas to said feed gas in a heat exchanger.

In a bulk chemistry process the efficient heat integration of the various elements of the process is important. Therefore it is common practice to use heat exchangers for transferring the heat developed in an exothermal process as energy input to the feed gases in order to provide a temperature sufficiently high for activation of the feed gas.

Such a configuration is typically called a feed/effluent heat exchange configuration, and it requires the use of a rather large and expensive gas/gas heat exchanger, but in many processes it is a preferred efficient configuration due to its thermal efficiency.

In synthetic natural gas production, which is a very exothermal process this has also been considered the optimal practice, and configurations have even been developed which collect energy in a stream of steam for export. Typically the steam for export is high pressure (and thus high temperature) steam produced e.g. in boilers.

However, according to the present disclosure it is proposed to use a less efficient means of heat exchange between the feed and the effluent; viz. a so-called secondary indirect heat exchange in which the primary process circuit is in thermal communication with a secondary heat exchange circuit in a configuration providing a means of heat transport via a heat transfer medium, such as steam, oil or salt.

The background for this proposal is not founded in operational costs, but in process risk management, according to which it is identified that the potential risk of leakage of feed gas to a downstream process stream may result in a product outside specifications. In addition if the feed gas is leaked to an intermediate position, it is a further risk that the feed gas may undergo exothermal methanation reaction in the downstream reactor and potentially overheat the reactor with damages on the catalyst as a consequence.

A further benefit of using a separate circuit of heat exchange medium is that this heat exchange medium circuit may be configured for an independent heating of the heat exchange medium, which provides benefits during process startup and other situations with fluctuating conditions.

### Figures

Figure 1 illustrates a methanation process with 3 adiabatic methanation reactors and a heat exchange with steam as heat exchange medium, and
Figure 2 illustrates a methanation process with 3 adiabatic methanation reactors and a feed-effluent heat exchanger.

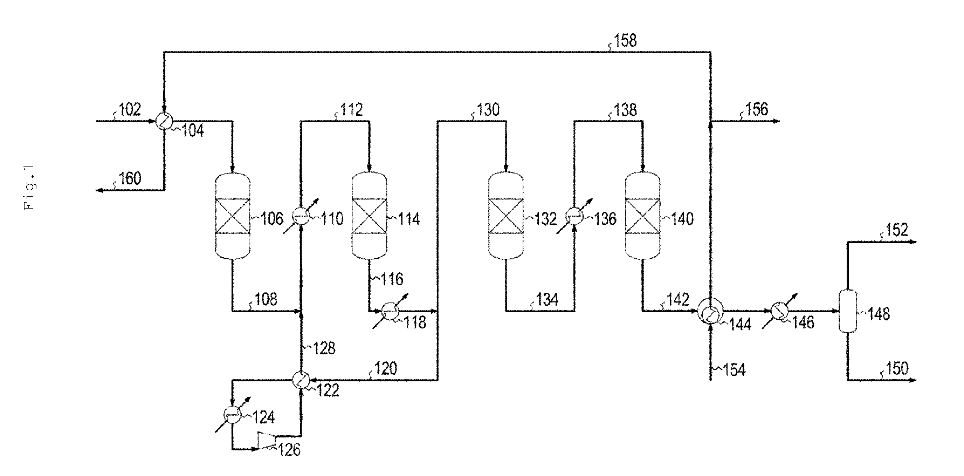

In Figure 1 a methanation process with steam as heat exchange medium is illustrated. Synthesis gas 102 is heated by a stream of steam 104 and directed to contact a catalytically active material in a sulfur guard 106. Recycled methane rich gas 128 is added to the desulfurized synthesis gas 108 to obtain a first methanation reactor feed gas 112. The methanation reactor feed gas 112 is heated 110 and directed to a first methanation reactor 114, from which a first methane rich gas 116 is withdrawn and cooled in a heat exchanger 118. The recycled part 120 of the first methane rich gas is cooled by a heat exchange 122 and further by a cooler 124 prior to reaching the recycle compressor 126. This gas is heated by a heat exchange 122 providing the recycled methane rich gas 128. The not recycled part 130 of the first methane rich gas is allowed to react further in a second 132 and a third 140 methanation reactor with intermediate cooling 136 of the second stage methane rich gas 134. The third stage methane rich gas 142 is cooled often with condensation of water in a boiler 144 and further by a cooler 146 before water 150 is separated in a condenser 148 and a synthetic natural gas 152 is produced.

The cooling medium 154 of the boiler 144 in this embodiment is water, which exits the boiler in form of steam 156,158, providing the heating medium 156 to heat exchange 104 with the synthesis gas 102 by condensation of the steam into water 160. In a further embodiment of the present disclosure steam may be replaced by an alternative heat exchange medium such as molten salt or oil.

In a further embodiment of the present disclosure the energy withdrawn in other heat exchangers may also be transferred for preheating the feed gas, e.g. by heating a heat transfer medium in heat exchangers (preferably 136, but possibly 118) and using this heat transfer medium for pre-heating the desulfurized methanation reactor feed gas in the heater 110.

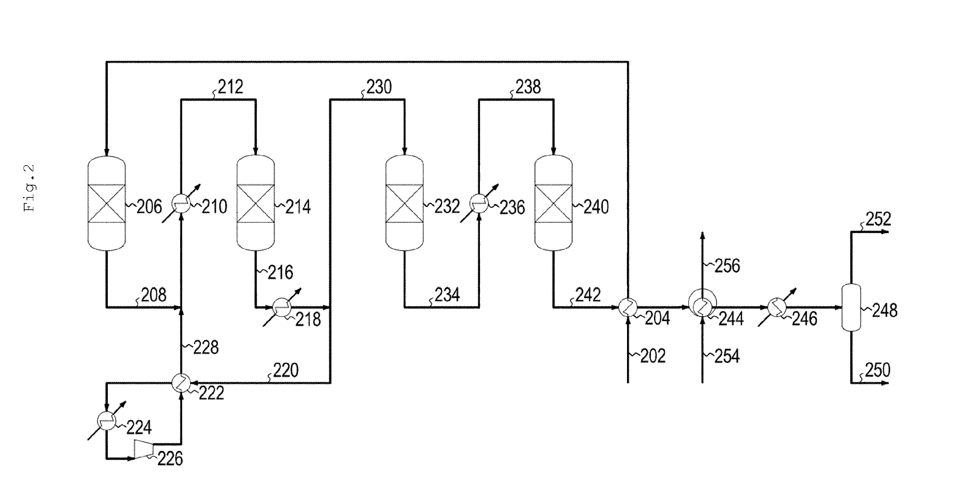

In Figure 2 a methanation process with a feed-effluent heat exchanger is illustrated. Synthesis gas 202 is heated 204 and directed to contact catalytically active material in a sulfur guard 206. Recycled methane rich gas 228 is added to the desulfurized synthesis gas 208 to obtain a first methanation reactor feed gas 212. The methanation reactor feed gas 212 is heated 210 and directed to a first methanation reactor 214, from which a first methane rich gas 216 is withdrawn and cooled in a heat exchanger 218. The recycled part 220 of the first methane rich gas is cooled by a heat exchange 222 and further by a cooler 224 prior to reaching the recycle compressor 226. This gas is heated by a heat exchange 222 providing the recycled methane rich gas 228. The not recycled part 230 of the first methane rich gas is allowed to react further in a second 232 and a third 240 methanation reactor with intermediate cooling 236 of the second stage methane rich gas 234. The third stage methane rich gas 242 is first cooled in a heat exchanger 204, additionally often with condensation of water in a boiler 244 and further by a cooler 246 before water 250 is separated in a condenser 248 and a synthetic natural gas 252 is produced.

The cooling medium 254 of the boiler 244 is water, which is outlet from the boiler as steam 256.

### Examples

Tables 1 and 2 show the composition, the flows and the temperatures of feed gas. Intermediate product gases and final synthetic natural gas are shown for a process according to the present disclosure (Table 1 corresponds to Figure 1 using a steam based heat exchange circuit) and a process according to the prior art (Table 2 corresponds to Figure 2 using a feed/effluent heat exchanger as illustrated in Figure 2). Where the stream passes a heat exchanger T HX in and T HX out indicates the temperature before and after the heat exchanger.

A comparison of Table 1 and Table 2 shows that the operation conditions of the two processes are identical, but that the export of steam 156 and 254/256 is reduced from 7665 Nm³ to 6629 Nm³ when using a secondary indirect heat exchange with steam according to Table 2. In addition a stream of 8725 m³ warm condensate of low value is obtained.

However this reduced efficiency is considered to be well balanced against the increased safety of process operation, e.g. obtained by the possibility of preheating the feed stream by an external steam source or by avoidance of leakages in gas/gas heat exchangers. Furthermore the flexibility obtained during fluctuating operation is deemed to be of a value justifying the reduced efficiency.

**Table 1**

| Composition [mole-%] : | 102 | 112 | 130 | 138 | 142 | 150 | 152 | 154 | 156 | 158 |
|---|---|---|---|---|---|---|---|---|---|---|
| CH₄ | 15.0 | 35.7 | 47.6 | 56.6 | 60.1 | - | 93.0 | - | - | - |
| CO | 20.0 | 8.7 | 2.3 | 0.1 | 0.0 | - | - | - | - | - |
| CO₂ | 1.0 | 3.0 | 4.1 | 2.2 | 0.8 | - | 1.2 | - | - | - |
| H₂ | 63.9 | 38.1 | 23.3 | 9.4 | 3.2 | - | 5.0 | - | - | - |
| H₂O | - | 14.2 | 22.5 | 31.4 | 35.6 | 100.0 | 0.2 | 100.0 | 100.0 | 100.0 |
| T HX in | 40 | - | - | - | 359 | - | - | 121 | - | 159 |
| T HX out | 145 | - | - | - | 180 | - | - | 159 | - | 159 |
| Pressure [bar g] | 40.0 | 38.4 | 37.2 | 36.0 | 35.2 | 34.4 | 34.4 | 5.0 | 5.0 | 5.0 |
| Temperature [°C] | - | 330 | 300 | 300 | - | 40 | 40 | - | 159 | - |
| Flow [Nm₃/h] | 100,000 | 273,250 | 66,599 | 60,995 | 59,057 | 20,930 | 38,127 | 15,354 | 6,629 | 8,725 |

**Table 2**

| Composition [mole-%] : | 202 | 212 | 230 | 238 | 242 | 250 | 252 | 254 | 256 | 258 |
|---|---|---|---|---|---|---|---|---|---|---|
| CH₄ | 15.0 | 35.7 | 47.6 | 56.6 | 60.1 | - | 93.0 | - | - | - |
| CO | 20.0 | 8.7 | 2.3 | 0.1 | 0.0 | - | - | - | - | - |
| CO₂ | 1.0 | 3.0 | 4.1 | 2.2 | 0.8 | - | 1.2 | - | - | - |
| H₂ | 63.9 | 38.1 | 23.3 | 9.4 | 3.2 | - | 5.0 | - | - | - |
| H₂O | - | 14.2 | 22.5 | 31.4 | 35.6 | 100.0 | 0.2 | 100.0 | 100.0 | 100.0 |
| T HX in | 40 | - | - | - | 359 | - | - | 121 | - | 159 |
| T HX out | 145 | - | - | - | 180 | - | - | 159 | - | 159 |
| Pressure [bar g] | 40.0 | 38.4 | 37.2 | 36.0 | 35.2 | 34.4 | 34.4 | 5.0 | 5.0 | 5.0 |
| Temperature [°C] | - | 330 | 300 | 300 | - | 40 | 40 | - | 159 | - |
| Flow [Nm₃/h] | 100,000 | 273,250 | 66,599 | 60,995 | 59,057 | 20,930 | 38,127 | 15,354 | 6, 629 | 8,725 |

## Claims

1. A methanation stage comprising at least one methanation reactor holding an amount of methanation catalyst, said reactor having an inlet for a stream of a feed gas rich in hydrogen and a carbon oxide, such as carbon monoxide or carbon dioxide, said reactor further being configured for directing said feed gas to contact said methanation catalyst, and where said methanation reactor further comprises an outlet for a stream of a methane rich gas having a higher temperature than said feed gas, where said methanation stage further comprises
a heat providing means for a heat exchange configured for heating said feed gas upstream said methanation reactor,
and a heat collecting means for a heat exchange configured for cooling said gas rich in methane downstream said methanation reactor,
**characterized in that** said two means for heat exchange are thermally connected by a heat transfer medium.

2. A methanation stage according to claim 1 wherein said heat transfer medium is steam, molten salt or oil.

3. A methanation stage according to claim 1 or 2 wherein the temperature of feed gas after heat exchange is 120-350°C

4. A methanation stage according to claim 1, 2 or 3 wherein said the temperature of methane rich gas prior to heat exchange is 450-750°C

5. A process plant comprising a methanation stage according to claim 1, 2, 3 or 4 and further comprising a reactor for gasification of carbonaceous materials, including coal, petcoke, waste or a renewable fuel.

6. A methanation stage or a process plant according to claim 1, 2, 3, 4 or 5 wherein said feed gas comprises coke oven gas

7. A methanation process comprising the steps of
preheating a feed gas rich in hydrogen and a carbon oxide, such as carbon monoxide or carbon dioxide by heat exchange with a heat exchange medium,
in the presence of a material catalytically active in methanation reacting said feed gas to form a methane rich gas having a higher temperature than said feed gas, and
transferring heat from said methane rich gas to said heat exchange medium.
